# EUROPEAN PATENT APPLICATION

(11) **EP 2 923 916 A1**
(43) Date of publication of application: **30.09.2015**
(21) Application number: 15159424.9
(22) Date of filing: 17.03.2015
(51) Int. Cl.: B62B 3/06, B66F 9/06

(54) **Sack truck**

(30) Priority: 27.03.2014 DK 201470157
(71) Applicant: RAVENDO A/S, 8800 Viborg (DK)
(72) Inventor: Nielsen, Jan Ulrik, 8800 Viborg (DK)
(74) Representative: Nielsen, Leif

(57) **Abstract**

There is disclosed a sack truck (1) adapted to lift heavy loads such as a household appliance (14) on and off a pallet (13). The sack truck (1) is provided with lower forks (7) provided with rollers (12) for support on the ground and for engaging spaces under a pallet (13). Upper rod-shaped forks (5) are provided displaceable along a frame (2) of the sack truck (1). The upper forks (5) are dimensioned and positioned to engage gaps between top boards of the pallet (13), reaching in under the load (14). By means of a belt drive (8, 9) the forks (5) can lift the load (14) off the pallet (13), and the load (14) can then be moved and unloaded at a desired place with only modest physical effort.

## Description

### Field of the Invention

The present invention relates to a sack truck for loading, moving and unloading a load.

### Background of the Invention

Sack trucks are well-known in numerous industrial applications, especially in connection with manually assisted handling of heavy articles, boxes and sacks. Common sack trucks comprise a frame supported at a first end by main wheels that are mounted rotatably about a common axis of rotation and a platform provided at the first end of the frame and in front of the frame for carrying the load. The leverage provided by the ratio of the short distance between main wheels and the load on the one hand and the long distance between main wheels and the handles on the other hand enables handling of loads up to 150 kg by one person. Common sack trucks have a relatively short platform, and engagement of the platform is effected by inserting the free edge of the platform under the load standing on the ground, and then tilting the load backwards together with the sack truck by pulling the handles and simultaneously pulling or holding an upper part of the load.

In some cases, additional handling is needed in order to transfer the load from a base or the ground onto the platform. This is particularly the case if the load is a heavy appliance, such as a washing machine, standing on a pallet. Washing machines and other industrially made articles are usually delivered from the producer on a standard pallet, and when the article is to be moved to its final position at the destination at the consumer or end user, it is necessary to do some manual handling in order to move the article from the pallet onto the sack truck. Since a typical washing machine weighs about 100 kg, the person or persons handling the machine are subjected to an undesirable great load which is also greater than recommended or allowed by most work environment standards.

### Objects of the Invention

An object of the invention is to alleviate the work with handling heavy articles or goods to be removed from or placed on a pallet. A further object of the invention is to improve the work environment in connection with moving heavy articles from a pallet. A further object of the invention is provide a sack truck adapted for easy handling of an article or object associated with a pallet. A still further object of the invention is to provide a sack truck adapted to move a heavy article from or onto a pallet in a more rapid and easy way than by the prior art.

### Description of the Invention

The sack truck according to the invention of the kind indicated in the introduction is peculiar in that the platform comprises:
- a pair of parallel lower forks extending from the front side of the frame at the first end of the frame, the lower forks extending substantially at right angles relative to the frame and being shaped and dimensioned so as to engage a pair of cutouts in a base part of a pallet, the lower forks including rollers for supporting the lower forks; and
- an array of at least two parallel, preferably rod-shaped, upper forks extending from the frame substantially in parallel with and above the lower forks and being shaped and dimensioned so as to engage at least two gaps at a top part of the pallet, the upper forks rigidly secured to a bracket which is suspended on the frame such that the upper forks can be displaced up and down along the frame.

The technical effect that is achieved is to enable the sack truck to engage a pallet such that the load on the pallet can be lifted from underneath the load without having a worker to physically lift the load to accommodate it on the sack truck's platform and, at the same time, without damaging the load and/or the pallet. Hence, such a sack truck can engage a pallet such that the load on the pallet can be lifted from underneath the load without having a worker to physically lift the load to accommodate it on the sack truck's platform and, at the same time, without damaging the load and/or the pallet.

The invention utilises the gaps occurring between the upper boards on top of a pallet, e.g. a standard EUR pallet, for engaging the bottom of the load or article on the pallet with the upper forks. The lower forks, which are similar to those on pallet trucks and include support rollers, preferably swivelling rollers, can be inserted in the usual way in the open spaces between the top part of a pallet and a base on which the pallet is standing. Since the shape, dimensions and arrangement of the lower forks are comparable to those of standard pallet trucks, it is easy to align and insert the lower forks in the spaces, whereby alignment of the upper forks with gaps at the top of the pallet can be achieved at the same time. After engaging the upper and lower forks with the openings in the pallet, the upper forks are moved upwards, thereby lifting the load or article off the pallet. The sack truck can then be drawn away from the pallet and the load or article be moved on the sack truck to the final position.

The sack truck according to the invention can of course be operated reversely, i.e. used for placing a heavy article or load on a pallet, by only reversing the order of actions.

In a preferred embodiment of the invention, the lower forks extend longer than the upper forks and the spacing between the lower forks is approximately the same as the spacing between the cutouts of the pallet. The technical effect that is achieved is to enable the automatic alignment of the upper forks of the sack truck with the gaps at the top part of the pallet. Indeed, the lower forks, being longer than the upper forks, enable the worker to orientate and engage the sack truck in the cutouts. At the same time, since the spacing between the lower forks is approximately the same as that in-between the cutouts, the sack truck is smoothly guided into the pallet while the upper works get automatically aligned to the gaps. Hence, such a sack truck can automatically align its upper forks with the gaps at the top part of the pallet.

In a preferred embodiment for use in connection with e.g. EUR pallets, the sack truck is adapted such that the upper forks are arranged to assume a bottom position from which upwards displacement can be performed, the bottom position corresponding to a horizontal plane in which the upper forks extend, the horizontal plane being disposed between 120 and 140 mm above a base on which the main wheels and the rollers can rest.

For pallets like EUR pallets with four gaps between the planks at the top, four parallel upper forks are provided in the inventive sack truck.

In order to fit the distance between the gaps at the top of most pallets, it is preferred that the upper forks are provided with mutual spacing in the range of 120 to 200 mm.

When adapting the inventive sack truck to EUR pallets, the spacing between the four upper forks is such that the spacing between a pair of upper forks constituted by an outer and an adjacent inner fork is about 140 mm measured between the central longitudinal axes of the forks, and wherein the spacing between the pair of inner forks is about 185 mm measured between the central longitudinal axes of the forks.

Advantageously, the sack truck may further comprise one or more handles mounted closer to a second end than the first end of the frame. The technical effect that is achieved is to enable steering and moving of a load disposed at a distance from the first end of the frame. Note that the handles are not indispensable for the functioning of the sack truck, since a worker could, for example, directly take hold of the frame to move the sack truck around.

In order to provide the up and down movement of the upper forks, the sack truck according to the invention is preferably designed such that the upper forks can be lifted from a bottom position to a top position by means of a belt, wire or chain connected to the bracket at one end and to a winch located in the frame at a distance from the first end of the frame at the other end.

For a simple and reliable drive for the winch, this can be manually driven by means of a crank handle.

The sack truck according to the invention can be arranged such that the belt, chain or wire is provided running wholly or partly in a central hollow column extending along the frame, the column provided with a longitudinal slot at the front side facing the upper forks, into which slot a part of the bracket extends for connection to the wire, chain or belt. Apart from the hollow column being a simple and reliable protective guideway for the belt or wire, the column may also constitute a reinforcing part of the frame of the sack truck.

In a further embodiment, the sack truck according to the invention can be provided with a pair of auxiliary wheels provided at the back side of the frame opposite the front side. The auxiliary wheels are attached to a framework extending from the back side of the frame such that the auxiliary wheels in an position of rest are above and behind the main wheels and not in contact with a base, and such that the auxiliary wheels in a position of use can engage the base and partially support the sack truck with a load when the frame is tilted backwards. By this embodiment it is possible to let the weight of the sack truck with load thereupon be supported by the main wheels and the auxiliary wheels in conjunction. This can be a substantial advantage when a heavy load is to be moved more than a few metres across a floor or extended base, thus relieving the person moving the load to it final position.

### Description of the Drawings

Embodiments of the invention will be described in more detail below with reference to the drawings, in which:
- Fig. 1: shows a preferred embodiment of the sack truck according to the invention in standing position in a perspective view from the side;
- Fig. 2: shows a lower front part of the sack truck of Fig. 1 in perspective view from above;
- Fig. 3: shows an enlarged detail of forks and bracket of the sack truck in perspective view;
- Fig. 4: shows a side perspective view of the sack truck of Fig. 1, in inclining position;
- Fig. 5: is a perspective view from below of the forks on the sack truck of Fig. 1;
- Figs. 6 - 8: illustrate three different stages of engaging a load with the sack truck according to the invention;
- Figs. 9 and 10: show perspective views from the side and the rear, respectively, of a loaded sack truck according to the invention, supported by auxiliary wheels; and
- Fig. 11: shows a detail of a variant of the sack truck according to the invention, with an electric drive mechanism.

### Description of Preferred Embodiments of the Invention

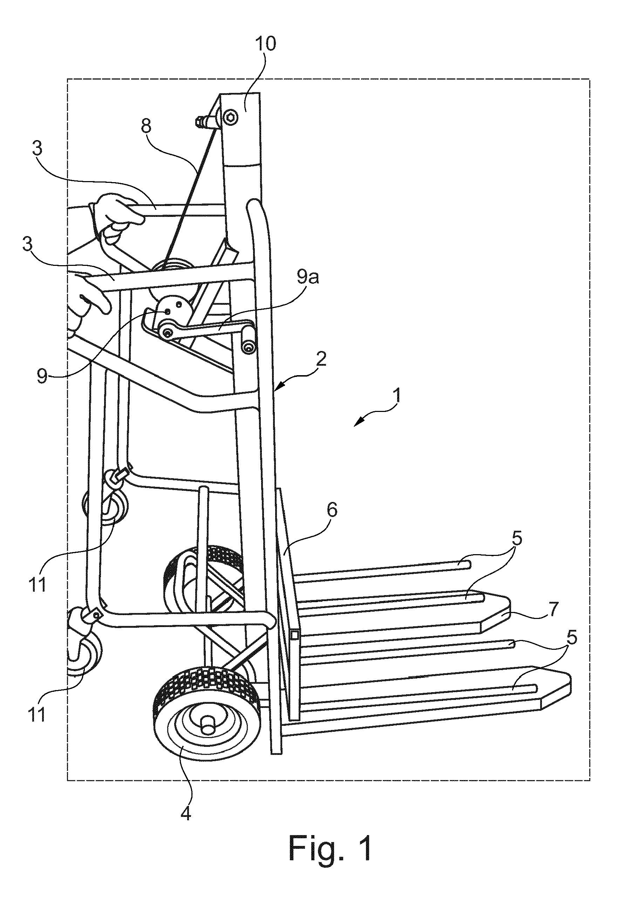

In the preferred embodiment according to the invention, the sack truck 1 comprises a frame 2 which is supported at the bottom by a couple of main wheels 4. The top of the frame 2 is provided with a pair of handles 3, see Fig. 1.

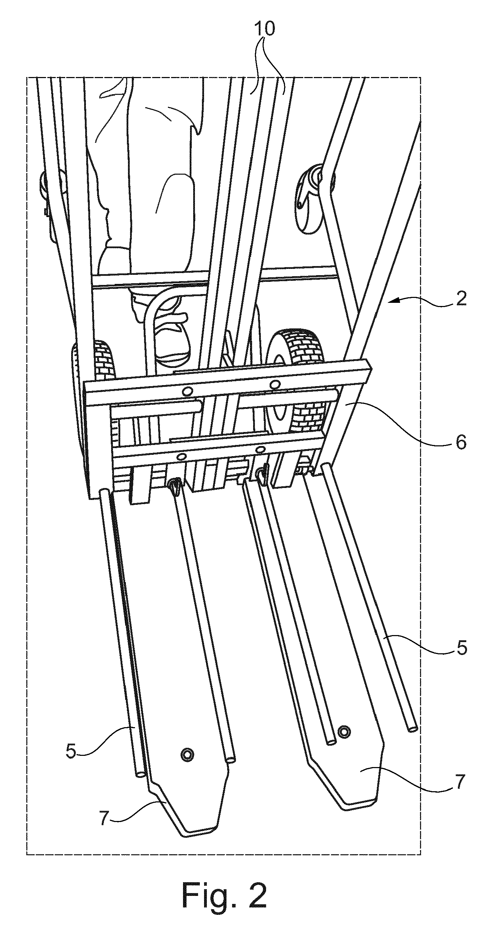

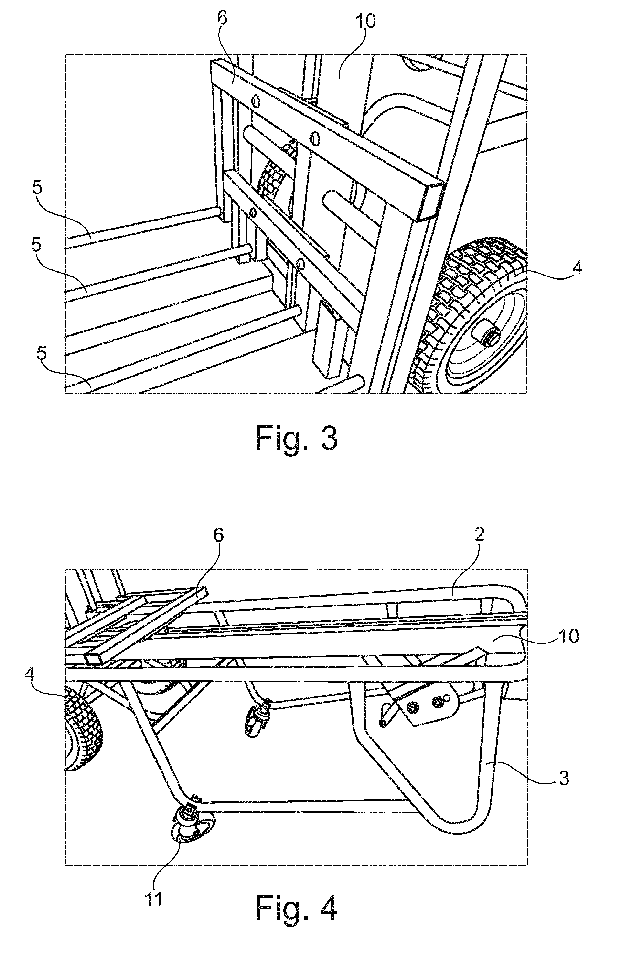

At the front of the frame 2 there is provided a bracket 6 which is a suspended movable element to which is secured a number of parallel rod-like upper forks 5 extending approximately at right angles to the bracket 6 and to the front of the frame 2. In this embodiment, four forks 5 are used but a greater or lesser number of upper forks 5 can be applied within the scope of the invention. The bracket 6 is here designed as a largely rectangular frame of tubular sections, but other constructions are possible. The sliding movement of the bracket 6 and upper forks 5 is provided by a belt drive constituted by a flat belt 8 running and guided in a central hollow column 10 in the frame 2, see Figs. 2 and 3. The column 10 is provided with a longitudinal slot at the front into which a not shown arm connects the bracket 6 with the belt 8. The belt 8 exits the top of the column 10 at a back side of the column 10, extending obliquely down to a drive mechanism 9, which in this case is manually driven winch 9 with a crank handle 9a, see Fig. 1. The manually driven winch 9 is provided with a not shown ratchet mechanism so as to lock the bracket 6 and forks 5 in an elevated position. The arrangement of belt 8, drive mechanism 9 and column 10 is known per se and will not be described in more detail.

In other embodiments, the belt 8 can be substituted by other means providing a pulling or lifting action, e.g. a chain drive or a linear actuator.

In order to support the sack truck 1 in the standing position and for aligning the upper forks 5 with a pallet, a pair of lower forks 7 are fixed to the frame 2, extending under and in parallel with the upper forks 5, see particularly Figs. 1, 2 and 5. In this embodiment, the lower forks 7 are dimensioned in width like forks on a conventional pallet truck and tapered at their free ends so as to easily engage the spaces under a standard EUR pallet. The lower forks 7 are here provided with swivelling rollers 12 for supporting the lower forks 7 on the ground or other base on which the sack truck 1 is situated.

The swivelling rollers 12 may in other embodiments be replaced by rollers with fixed axes of rotation and be seated in apertures in the lower forks.

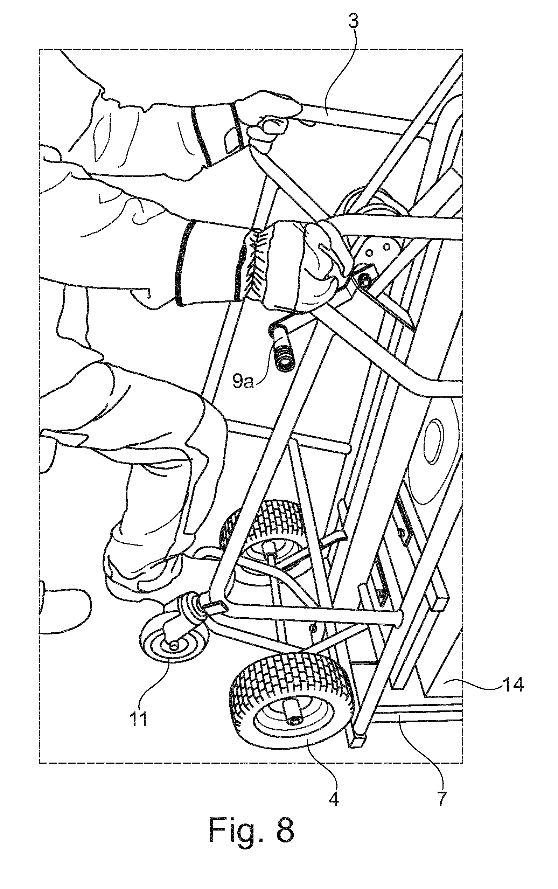

At the rear of the frame 2, a pair of auxiliary wheels 11 are provided at a position which is above and behind the main wheels 4 when the sack truck 1 is in its standing position, see e.g. Figs. 1 and 8. The auxiliary wheels 11 support the sack truck 1 together with the main wheels 4 when the sack truck is tilted rearwards, see Fig. 4.

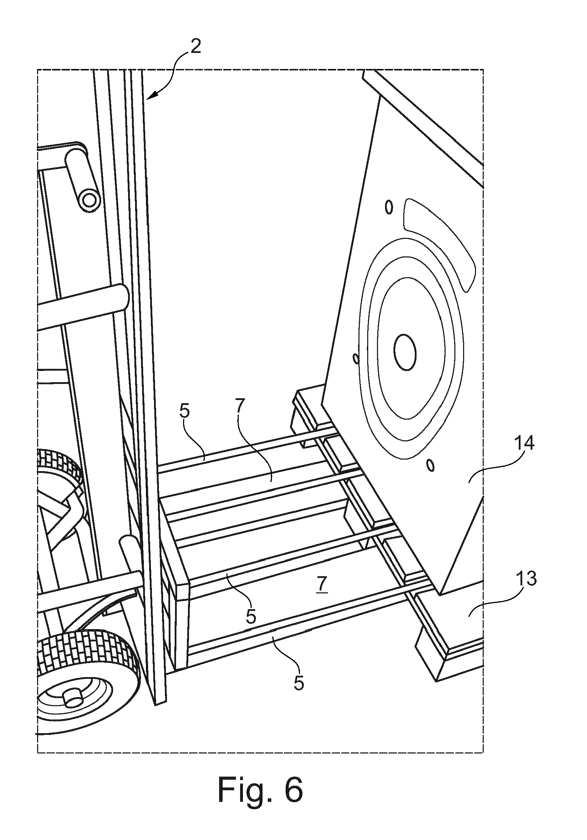

Use of the sack truck 1 according to the invention is illustrated on Figs. 6 - 10, where a heavy load such as a washing machine 14 is to be lifted off a standard EUR pallet 13.

First, the upper forks 5 are lowered to their initial position which is 120 to 140 mm above the ground or base on which the pallet 13 resting. For engaging the narrow gaps between the upper boards of the pallet 13, the upper forks 5 are made as cylindrical rods with a diameter about 20 mm, but other dimensions of forks are possible for other applications of the inventive sack truck. The lower forks 7, supported by the swivelling rollers 12, are inserted in the two spaces appearing under the pallet 13, see Fig. 6.

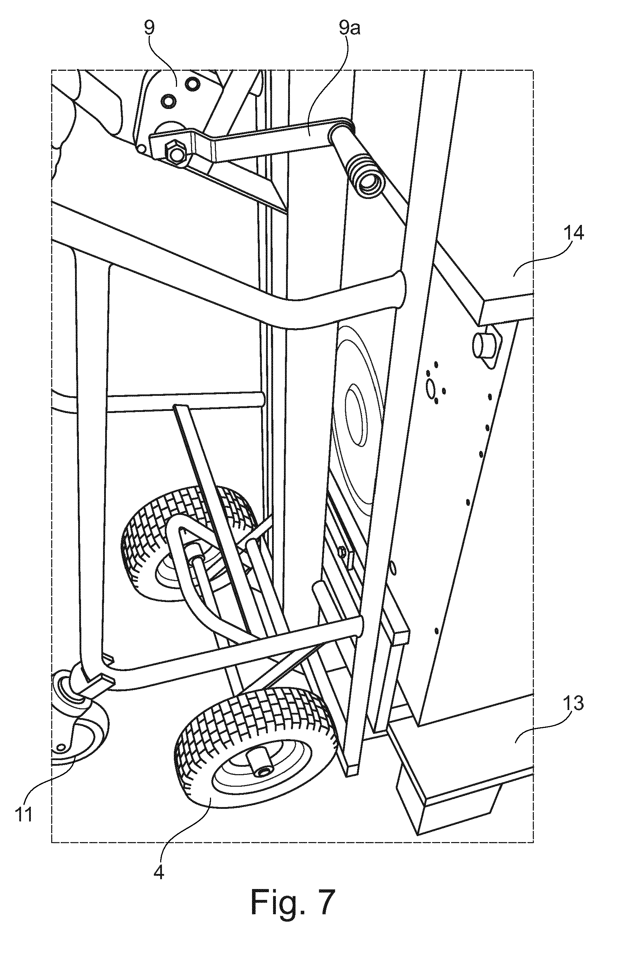

The sack truck 1 is then pushed so that the upper forks 5 are fully inserted under the load 14, see Fig. 7, and by means of the handle 9a on the winch 9, the bracket 6 and forks 5 can be elevated and lift the load 14 off the pallet 13. Then the load 14 can be moved away from the pallet 13 by pulling the sack truck 1 by the handles 3 as the load 14 is now fully supported by wheels 4 and rollers 12. Only a modest physical strength is needed by the person handling the load.

It is noted that load 14 can be lifted farther up than illustrated on the Figures. By using the winch 9, the load 14 can be elevated up to 1 m over the floor or ground. It is then possible to move a load 14 from the position shown on Fig. 8 to a level which is located some distance above the ground, e.g. on a platform on a vehicle. This will be very practical when moving the load or article 14 from a storeroom to a vehicle. The reverse operation is obviously possible, i.e. engaging and moving a load from an elevated platform down to ground level and into e.g. a storeroom or a final position of the load.

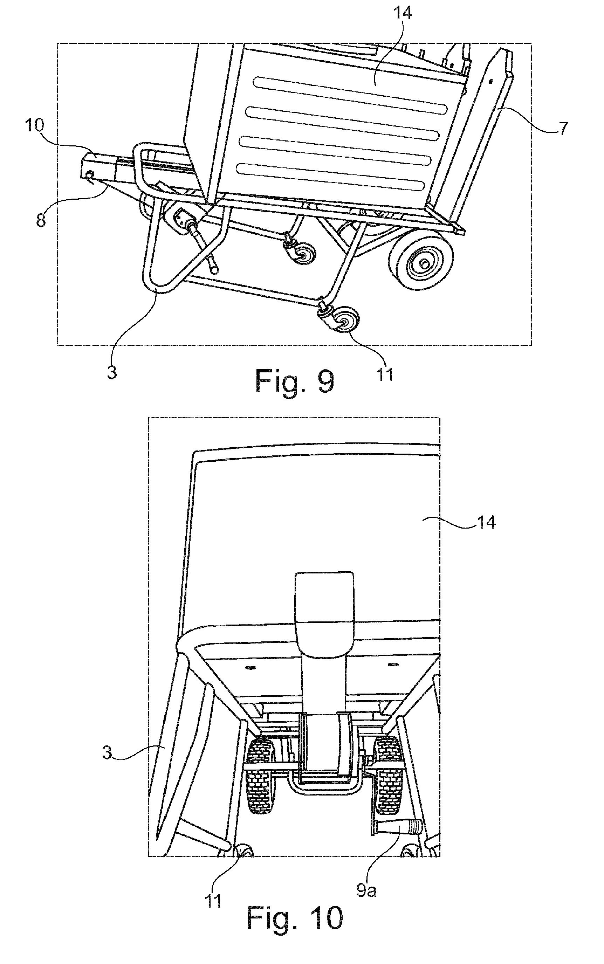

For moving the load 14 over some distance it can be preferred to use the auxiliary wheels 11. The sack truck 1 with load 14 is then tilted backwards, possibly aided by stepping on a foot lever 15 while pulling the handles 3, see Fig. 8, and so that the sack truck 1 assumes an inclined position as seen on Fig. 9. The sack truck 1 in this position is more easily manoeuvred and can more easily overcome door steps and similar obstacles on the way.

Unloading the sack truck 1 is done manually and will not require so much strength since the movement from the forks 5 to the ground is short and downwards in the direction of the force of gravity.
The sack truck according to the invention can obviously be used for loading a heavy article or load onto a pallet, just reversing the order of action described above.

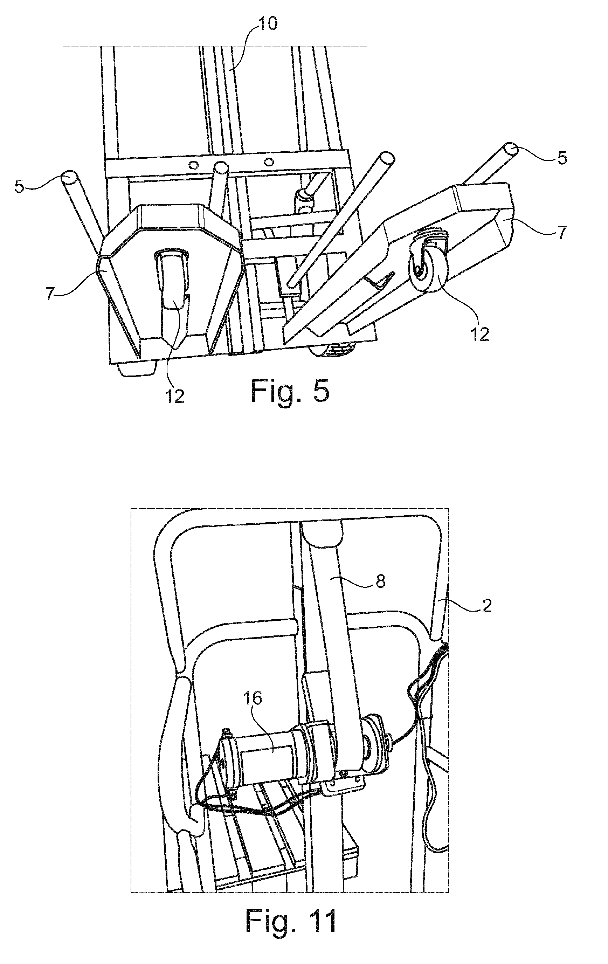

In another embodiment of the sack truck according to the invention, the manual winch is replaced by a winch driven by an electric motor 16, see Fig. 11. This motor 16 can be powered by a not shown rechargeable battery and operated by buttons provided at or close to the handles 3.

The present embodiment is explained in connection with a standard EUR pallet. However, the sack truck may also be used for half pallets and quarter pallets of standard type. Furthermore the sack truck can be used for handling disposable pallets, possibly with suitable modifications of the forks.

## Claims

1. A sack truck for loading, moving and unloading a load, **characterized in that** the sack truck comprises a frame supported at a first end by main wheels that are mounted rotatably about a common axis of rotation and a platform provided at the first end of the frame and in front of the frame for carrying the load, the platform including:
- a pair of parallel lower forks extending from the front side of the frame at the first end of the frame, the lower forks extending substantially at right angles relative to the frame and being shaped and dimensioned so as to engage a pair of cutouts in a base part of a pallet, the lower forks including rollers for supporting the lower forks; and
- an array of at least two parallel, preferably rod-shaped, upper forks extending from the frame substantially in parallel with and above the lower forks and being shaped and dimensioned so as to engage at least two gaps at a top part of the pallet, the upper forks rigidly secured to a bracket which is suspended on the frame such that the upper forks can be displaced up and down along the frame.

2. A sack truck according to claim 1, wherein the lower forks extend longer than the upper forks and the spacing between the lower forks is approximately the same as the spacing between the cutouts of the pallet.

3. A sack truck according to claim 1 or claim 2, wherein the upper forks are arranged to assume a bottom position from which upwards displacement can be performed, the bottom position corresponding to a horizontal plane in which the upper forks extend, the horizontal plane being disposed between 120 and 140 mm above a base on which the main wheels and the rollers can rest.

4. A sack truck according to any preceding claim, wherein there are four parallel upper forks.

5. A sack truck according to any preceding claim, wherein the upper forks are provided with a mutual spacing in the range of 120 to 200 mm.

6. A sack truck according to claims 4 or 5, wherein the spacing between the four upper forks is such that the spacing between two upper forks constituted by an outer and an adjacent inner fork is about 140 mm measured between the central longitudinal axes of the forks, and wherein the spacing between the pair of inner forks is about 185 mm measured between the central longitudinal axes of the forks.

7. A sack truck according to any preceding claim, wherein the upper forks are arranged such as to be lifted from a bottom position to a top position by means of a belt, wire or chain connected to the bracket at one end and to a winch located in the frame at a distance from the first end of the frame at the other end.

8. A sack truck according to claim 7, wherein the winch is manually driven by means of a crank handle.

9. A sack truck according to claims 7 or 8, wherein the belt, chain or wire is provided running wholly or partly in a central hollow column extending along the frame, the column provided with a longitudinal slot at the front side facing the upper forks, into which slot a part of the bracket extends for connection to the wire, chain or belt.

10. A sack truck according to any preceding claim, wherein a pair of auxiliary wheels are provided at the back side of the frame opposite the front side, the auxiliary wheels attached to a framework extending from the back side of the frame such that the auxiliary wheels in an position of rest are above and behind the main wheels and not in contact with the base, and such that the auxiliary wheels in a position of use can engage the base and partially support the sack truck with a load when the frame is tilted backwards.

11. A sack truck according to claim 7, wherein the winch is driven by an electric motor.
